# EUROPEAN PATENT SPECIFICATION

(11) **EP 2 496 009 B1**
(45) Date of publication and mention of the grant of the patent: **01.09.2021**
(21) Application number: 10826044.9
(22) Date of filing: 18.10.2010
(51) Int. Cl.: H04L 12/18, H04W 4/06, H04W 28/04, H04L 1/00, H04L 1/18, H04L 12/58

(54) **METHOD, DEVICE AND SYSTEM FOR SYNCHRONIZING MBMS**
MBMS-SYNCHRONISATIONSVERFAHREN, -VORRICHTUNG UND -SYSTEM
PROCÉDÉ, DISPOSITIF ET SYSTÈME DE SYNCHRONISATION DE SERVICE MBMS

(30) Priority: 27.10.2009 CN 200910236916
(43) Date of publication of application: 05.09.2012
(73) Proprietor: Datang Mobile Communications Equipment Co., Ltd., Beijing 100085 (CN)
(72) Inventor: ZHANG, Dajun, Beijing 100083 (CN); YANG, Xiaodong, Beijing 100083 (CN)
(74) Representative: Studio Torta S.p.A.
(86) International application number: PCT/CN2010/077839
(87) International publication number: WO 2011/050681

(56) References cited:
- EP-A2- 2 445 207
- WO-A2-2008/155332
- CN-A- 101 247 544
- CN-A- 101 436 943
- CN-A- 101 500 193
- None

## Description

### TECHNICAL FIELD

The present disclosure relates generally to communication technology, and, more particularly, to a method, device and system for synchronizing MBMS.

### BACKGROUND

In LTE (Long Term Evolution) system, MBMS (Multimedia Broadcast Multicast Service) is used to provide multimedia broadcast and multicast service for the user in wireless cells; it can provide MBMS both on MBMS-specified frequency layer and non-MBMS service shared frequency layer. The LTE cell which support MBMS could be MBMS-specified cell, and the cell which mix MBMS and unicast as well; the MBMS service could perform single cell transmission, and perform multi-cell transmission as well; besides, the multi-cell transmission of MBMS need to support MBSFN (Multicast Broadcast Single Frequency Network) transmission.

Specifically, the MBSFN means performing synchronous transmission in the same time and with the same frequency among multiple cells; the frequency resource could be saved and the spectrum utilization could be increased through MBSFN transmission. Therein the MBSFN requires the multi cells sending the same content at same time, meanwhile the UE (User Equipment) equating multiple MBSFN cells as a large cell; therefore the UE will not be interfered by the transmission of neighbor cell, and the signals from multiple MBSFN cells are superimposed, which enhances the reliability in receiving and expands the coverage. Moreover, through MBSFN, the UE also solves the problem on time difference of multi-path dissemination, which eliminates the interference among cells; and the solves cover blind unit with the diversity effect as a result of multi-cell common frequency transmission.

In the course of MBMS multi-cell transmission, the corresponding technical characteristics comprising:
(1) The MBMS synchronous transmission in MBSFN region.
(2) Supporting the combining of MBMS transmission of multiple cells.
(3) The channels of MTCH (Multicast Traffic Channel) and MCCH (Multicast Control Channel) are mapped on the MCH (Multicast Channel) physical channel for PTM (Packet Transfer Mode).
(4) The synchronous region of MBSFN could be configured in semi-static, such as: configuring the synchronous region of MBSFN through O&M (Operations & Maintenanc).

Specifically, to ensure all base stations in MBSFN region sending identical data, synchronization protocol are introduced in BM-SC (Broadcast/Multicast Service Center).

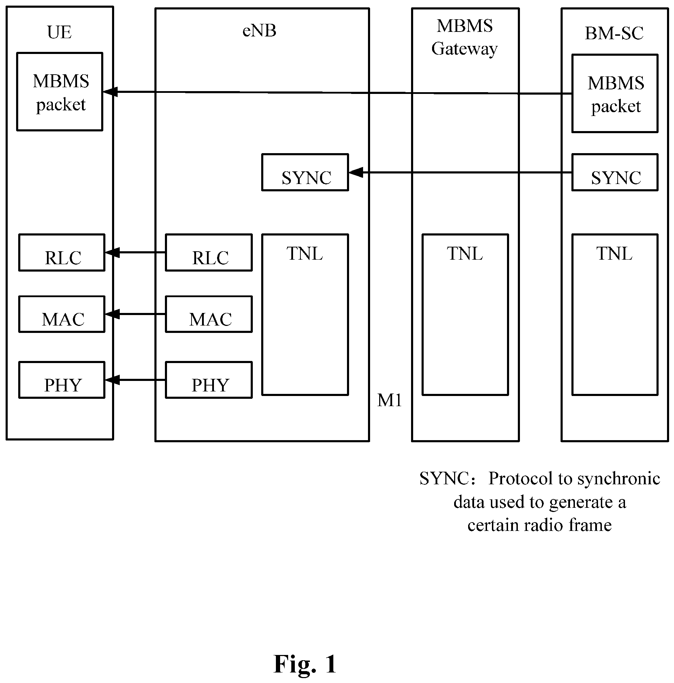

FIG.1 shows the schematic diagram of LTE MBMS synchronizing protocol stack, therein BM-SC organizing MBMS data, and adding synchronous frame header in each data frame, sending the data to MBMS GW (Gateway), the MBMS service data are sent to the base stations all in the MBSFN region by MBMS GW in IP multicasting.

In the present design of system, synchronous data are organized by the cycle of synchronous sequence, the base station determining the end of a synchronous sequence according to the synchronous control frame of received synchronous sequence TYPE 0, then organizing data scheduling, comprising:
(1) BM-SC structuring control frame (TYPE 0) at the end of each synchronous sequence, sending it to all base stations in synchronous region repeatedly.
(2) The base station receiving the control frame (TYPE 0), marking it as the end of synchronous sequence, and organizing data scheduling according to the cached order of synchronous data frame.
(3) The base station sending aforementioned MBMS service data at air interface according to the specified time point.

Put all of these together, it is obvious that according to the present synchronous mechanism, if multiple contiguous synchronous data frame are missed, the base station falling synchronization will stop sending synchronous data frame until next synchronous cycle; if it is only one frame synchronous data that is missed, just stopping sending the data frame, to which there is no effect on subsequent data sending.

However, in the implementing procedure of the invention, the applicant found at least following problems in present technique:
When multiple continues synchronous data frame are missed, and the base station falling synchronization stopping sending synchronous data, until next synchronous cycle arrives, the subsequent data frame sending would be affected greatly, besides, while under the service integration situation, the subsequent processing of sending MBMS service would be also seriously affected.

WO2008/155332A2 relates to a method comprising providing a plurality of services to be transmitted over a common area by a plurality of nodes; and providing information relating to a quantity of data of said plurality of services for all of said services to said plurality of nodes.

### Contents of the invention

The invention is defined by the appended independent claims. The method is disclosed in claim 1, while the apparatus is disclosed in claim 7.

Compared with present technology, the invention has at least following advantages: the base station falling synchronization in MBSFN region could regain synchronization while under the condition that missing synchronous data frame continuously; and has no effect on the transmission of the subsequent MBMS service, which promotes the feeling of the user when receiving the MBMS service in the MBSFN region effectively.

### BRIEF DESCRIPTION OF THE DRAWINGS

FIG.1 is a schematic diagram of LTE MBMS synchronizing protocol stack in existing technology;
FIG.2 is a schematic diagram of stopping send all continues MBMS data frame until next synchronous cycle arrives;
FIG. 3 illustrates the structure of synchronous control frame which is being sent repeatedly;
FIG. 4 illustrates the structure of synchronous control frame which has been added within data distribution of each PDU in sequence;
FIG. 5 is a schematic flow of a method for synchronizing MBMS which is provided by the embodiment 1 of the invention;
FIG. 6 is a schematic flow of a method for synchronizing MBMS which is provided by the invention;
FIG. 7 is a schematic flow of a method for synchronizing MBMS which provided by the invention;
FIG. 8 illustrates the structure of a device on network side which provided by the embodiment of the invention;
FIG. 9 illustrates the structure of a BM-SC which provided by the invention.

### MODE OF CARRYING OUT THE INVENTION

Aiming at the problem that the MBMS service would falling synchronization when the base stations in MBSFN region missing MBMS service frame continually in synchronous cycle.

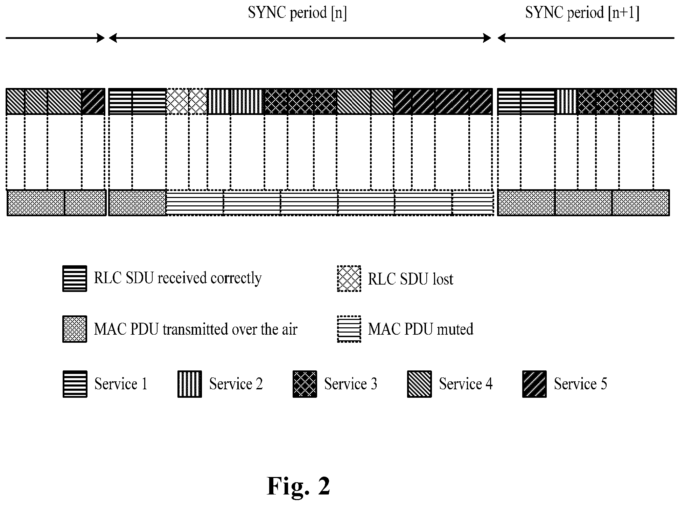

In present technology, if it is only one frame that is missed, according to the synchronization portal, the recover for falling synchronization would be preceded; if multiple MBMS service frames are missed subsequently, according to the present specification and definition, the base station only realizes the total of missing data, and the number of the MBMS service frames which are missed, however the data distribution in each synchronous frame could not be determined; as a result of which the base station could not determine the number of the header of RLC (Radio Link Control), the number and the content of corresponding RLC PDU (Protocol Data Unit) would be affected, for avoiding affecting the synchronization of the whole MBSFN region, it is needed to stop sending all the continues MBMS data frame; which has a affect on other continues MBMS service sending while under the service integration situation, as is shown in FIG2, a schematic diagram of stopping send all continues MBMS data frame until next synchronous cycle arrives.

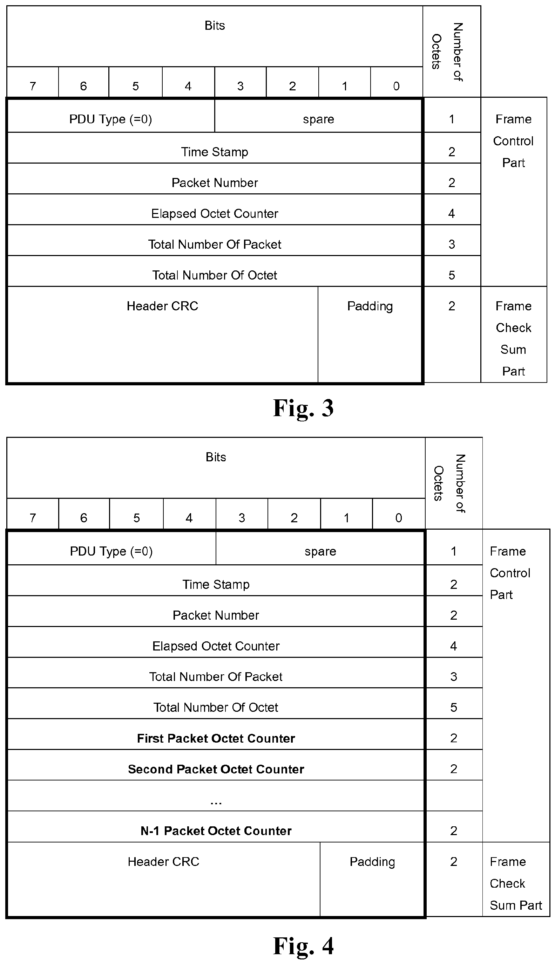

Furthermore, according to the present definition, when a synchronous cycle consist of some synchronous sequence, in the end of each synchronous sequence the synchronous control frame of TYPE 0 is sent repeatedly, the structure of the synchronous control frame which is sent repeatedly is as shown in FIG.3.

In the invention, through modifying the structure of the present synchronous control frame which is sent repeatedly, adding data distribution of each PDU that in sequence to synchronous control frame, so that the base station could obtain corresponding RLC PDU content through the structure of the synchronous control frame when being received the synchronous control frame, as the structure of the modified synchronous control frame shown in FIG.4.

Specifically, in the structure of the modified synchronous control frame, First Packet Octet Counter marks the bytes of the first synchronous frame which has been sent in synchronous sequence, Second Packet Octet Counter marks the bytes of the second synchronous frame which has been sent in synchronous sequence, accordingly, N-1 Packet Octet Counter marks the bytes of the N-1-th synchronous frame which has been sent in synchronous sequence.

It should be noted that, for marking the bytes of each synchronous frame, 2 bytes or 11 bits would be fine; of course, in practical application, the marking is not restricted to 2 bytes or 11 bits, all the way for marking the bytes of each synchronous frame are within the protection range of the embodiments of the invention. It could be seen that the bytes of each synchronous frame are marked in 2 bytes as an example in FIG.4.

As can be seen that, through adding data distribution of each PDU in sequence to the structure of the modified synchronous control frame, the base station that falling synchronization could obtain the load distribution of the continually missed synchronous frame, then obtaining the construction of RLC PDU, so that the base station could determine which packet should be stopped from sending based on the load distribution of the continually missed synchronous frames and the construction of RLC PDU under the condition that multiple MBMS service frames are continually missed, which has no effect on the subsequent normal transmission of data frames.

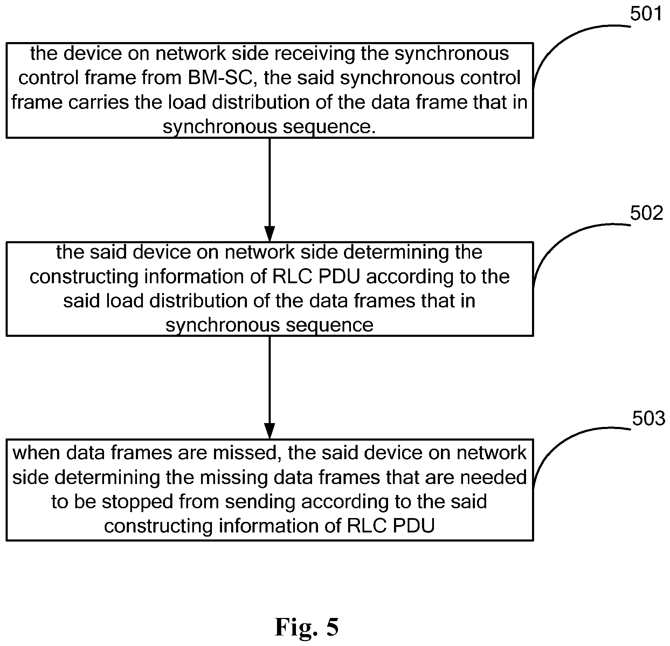

A is shown in FIG.5, a method for synchronizing MBMS which is provided by the embodiment 1 of the invention, comprising following steps:
Step 501, the device on network side receiving the synchronous control frame from BM-SC, the said synchronous control frame carries the load distribution of the data frame that in synchronous sequence. The said load distribution of the data frame that in synchronous sequence, which is carried by the synchronous control frame, comprising: the load distribution of data frames in all synchronous sequence; or, the load distribution of data frames that are even numbered in synchronous sequence; or, the load distribution of data frames that are odd numbered in synchronous sequence.
Step 502, the said device on network side determining the constructing information of RLC PDU according to the said load distribution of the data frames that in synchronous sequence.
Step 503, when data frames are missed, the said device on network side determining the missing data frames that are needed to be stopped from sending according to the said constructing information of RLC PDU.

In the embodiments of the invention, when the said synchronous control frame carries the load distribution of the data frames in all synchronous sequence, the said device on network side determining the data frames that are needed to be stopped from sending according to the constructing information of the said RLC PDU, comprising: when the missing condition of the data frames is continually data frames missing, the said device on network side determining the missing data frames that are needed to be stopped from sending according to the constructing information of the said RLC PDU.

When the said device on network side has not been received the said synchronous control frame, the said device on network side stopping sending data frames until next synchronous cycle.

When the said synchronous control frame carries the load distribution of the data frames that are even numbered in synchronous sequence, the said device on network side determining the constructing information of RLC PDU according to the said load distribution of the data frames that in synchronous sequence, comprising: the device on network side determining the constructing information of RLC PDU according to the load distribution of two consecutive data frames and the load distribution of the data frames that are even numbered in synchronous sequence; or,

When the said synchronous control frame carries the load distribution of the data frames that are odd numbered in synchronous sequence, the said device on network side determining the constructing information of RLC PDU according to the said load distribution of the data frames that in synchronous sequence, comprising: the device on network side determining the constructing information of RLC PDU according to the load distribution of two consecutive data frames and the load distribution of the data frames that are odd numbered in synchronous sequence.

The said device on network side determining the missing data frames that are needed to be stopped from sending according to the said constructing information of RLC PDU, comprising: When under the data frame missing condition that two consecutive data frames are missed, the said device on network side determining the data frames that are needed to be stopped from sending according to the constructing information of the said RLC PDU.

When the said device on network side has not been received the said synchronous control frame, or, the missing condition of data frames is that two more consecutive data frames are missed, the said device on network side stopping sending data frames until next synchronous cycle.

It should be noted that when missing condition of data frames is that no data frames are missed or only one data frame is missed, the said device on network side abandoning the constructing information of the said RLC PDU.

Furthermore, before step 501, comprising:
BM-SC constructing synchronous control frame, and sending the said synchronous control frame to device on network side, the said device on network side determining the constructing information of RLC PDU according to the load distribution of the data frame in the said synchronous sequence; when the data frames are missed, determining the missing data frames that are needed to be stopped from sending according to the constructing information of the said RLC PDU.

Obviously, through the method provided by the invention, the base station falling synchronization in MBSFN region could regain synchronization while under the condition that missing synchronous data frame continuously; and has no effect on the transmission of the subsequent MBMS service, which promotes the feeling of the user when receiving the MBMS service in the MBSFN region effectively.

A method for synchronizing MBMS is provided by the invention, which applies in the MBMS technology of LTE system, in the invention, the device on network side including without limitation RNC (Radio Network Controller), NB (Node B), eNB, base station and so on, note that the device on network side is not limited to above device, all the device on the network side is within the protection range of the invention. For the purposes of description, the device on network side in the embodiments of the invention is explained as base station for example.

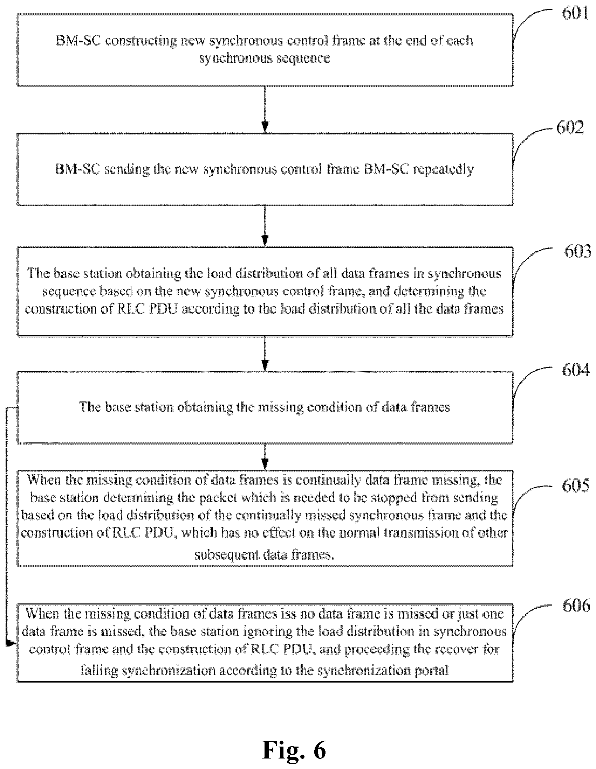

As is shown in FIG.6, the method for synchronizing MBMS comprising following steps:
Step 601, BM-SC constructing new synchronous control frame at the end of each synchronous sequence.

Therein, the new synchronous control frame carries the load distribution of all the data frames in synchronous sequence, which is the data distribution of each PDU in sequence, the synchronous control frame shown in FIG.4.

In FIG.4, the synchronous control frame has been added new parts such as First Packet Octet Counter, Second Packet Octet Counter, ... , N-1 Packet Octet Counter and so on, the other parts is the same with those in present synchronous control frame , it is unnecessary to give more details in the embodiments of the invention.

Specifically, First Packet Octet Counter marks the bytes of the first synchronous frame which has been sent in synchronous sequence, Second Packet Octet Counter marks the bytes of the second synchronous frame which has been sent in synchronous sequence, accordingly, N-1 Packet Octet Counter marks the bytes of the N-1-th synchronous frame which has been sent in synchronous sequence.

Furthermore, when the base station has been received the synchronous control frame, under the condition that continually missing synchronous frame, according to the new parts in the structure of above synchronous control frame (the load distribution of all data frame in synchronous sequence), the base station could realizes the load distribution of the continually missed synchronous frame, then realizes the construction of RLC PDU, so that when multiple MBMS service frames are continually missed, the base station could determine the packet which is needed to be stopped from sending based on the load distribution of the continually missed synchronous frame and the construction of RLC PDU, which has no effect on the normal transmission of subsequent data frames.

As the bytes of each synchronous frame is carried in synchronous control frame, according to the bytes of each synchronous frame, the base station could determine the construction of RLC PDU. For example, when the bytes of first synchronous frame is 10bit, the bytes of second synchronous frame is 10bit, the bytes of third synchronous frame is 10bit, according to the bytes of each synchronous frame, the base station determining the construction of RLC PDU that the first bit to the tenth bit as the first synchronous frame, the eleventh bit to the twentieth as the second synchronous frame, accordingly. If the synchronous frame is continually missed, the base station could determine the packet which is needed to be stopped from sending according to the construction of the RLC PDU, it is unnecessary to go into details.

Step 602, BM-SC sending the new synchronous control frame BM-SC repeatedly. After new synchronous control frame has been constructed, the BM-SC needs to send the new synchronous control frame repeatedly, so that the base station could proceed subsequent processing according to the new synchronous control frame.

Step 603, the base station obtaining the load distribution of all data frames in synchronous sequence based on the new synchronous control frame, and determining the construction of RLC PDU according to the load distribution of all the data frames.

When being received the new synchronous control frame from BM-SC, according to the load distribution of all the data frames in synchronous sequence, which is carried by the new synchronous control frame, the base station could determine the construction of RLC PDU based on the load distribution of all the data frames, the processing has been introduced in above steps and will not go into the details here.

Step 604, the base station obtaining the missing condition of data frames. If the missing condition of data frames reveals continually data frame missing, turn to Step 605, if the missing condition of data frames reveals no data frame is missed or just one data frame is missed, turn to Step 606.

Specifically, when being received new synchronous control frame, the base station could obtain the missing condition of data frame based on the new synchronous control frame, it is present obtaining processing and will not go into the details of the invention.

It should be noted that there is no precedence relation between this step and Step 603, they can be proceeded at the same time.

Step 605, the base station determining the packet which is needed to be stopped from sending based on the load distribution of the continually missed synchronous frame and the construction of RLC PDU, which has no effect on the normal transmission of other subsequent data frames.

Step 606, the base station ignoring the load distribution in synchronous control frame and the construction of RLC PDU, and proceeding the recover for falling synchronization according to the synchronization portal. The processing in this step is the same with present technology and will not go into the details of the invention.

It should note that in the invention, if the base station has not been received the synchronous control frame, then the base station stop sending service data until next synchronization cycle.

Besides, to distinguish itself from present R8 system, the synchronous control frame above can be defined as a new type in the invention, for example, defining the synchronous control frame above as TYPE 3 and so on, it is unnecessary to go into details.

Therein, the steps in the invention could be adjusted according to practical necessity.

Obviously, through the method provided by the invention, the base station falling synchronization in MBSFN region could regain synchronization while under the condition that missing synchronous data frame continuously; and has no effect on the transmission of the subsequent MBMS service, which promotes the feeling of the user when receiving the MBMS service in the MBSFN region effectively.

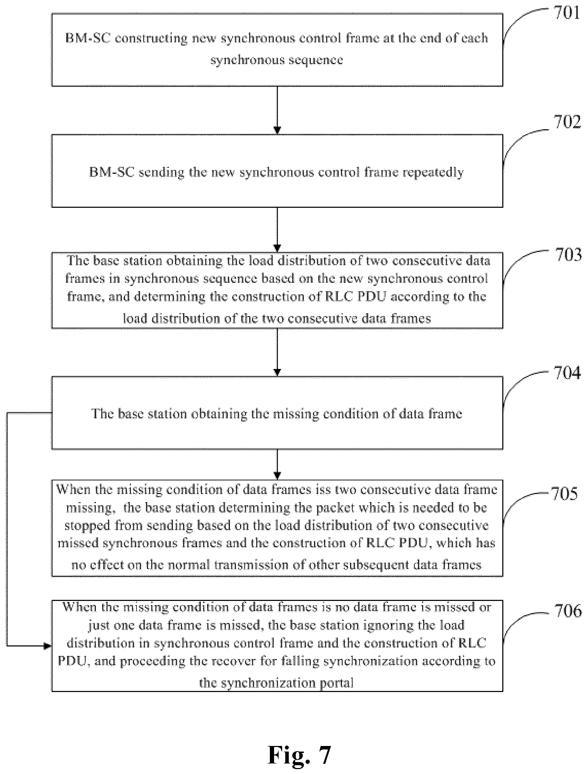

A method for synchronizing MBMS is provided by the invention, as is shown in FIG.7, comprising:
Step 701, BM-SC constructing new synchronous control frame at the end of each synchronous sequence.

Therein, the new synchronous control frame carries the load distribution of the data frames that are odd numbered in synchronous sequence; or,

In this new synchronous control frame, the load distribution of the data frames that are even numbered in synchronous sequence is carried.

Specifically, like the synchronous control frame shown in FIG.4, the synchronous control frame has been added new parts such as First Packet Octet Counter, Third Packet Octet Counter and so on, the other parts is the same with those in present synchronous control frame , it is unnecessary to give more details in the invention. The First Packet Octet Counter marks the bytes of the first synchronous frame which has been sent in synchronous sequence, the Third Packet Octet Counter marks the bytes of the first synchronous frame which has been sent in synchronous sequence, accordingly.

It should be noted that the condition above is explained as carrying the load distribution of the data frames that are odd numbered in synchronous sequence for example, in practical application, it also has the condition that carrying the load distribution of the data frames that are even numbered in synchronous sequence, which is not described anymore here.

Step 702, BM-SC sending the new synchronous control frame repeatedly. After the new synchronous control frame has been constructed, the BM-SC needs to send the new synchronous control frame, so that the base station could proceed subsequent processing according to the new synchronous control frame.

Step 703, the base station obtaining the load distribution of two consecutive data frames in synchronous sequence based on the new synchronous control frame, and determining the construction of RLC PDU according to the load distribution of the two consecutive data frames. The base station based on the missing condition of two consecutive data frames, combining with the load distribution of the control frames which are odd numbered (even numbered), and the total amount of missing data, determining the construction of each RLV PDU.

Therein, when being received the new synchronous control frame from BM-SC, according to the load distribution of the two consecutive data frames in synchronous sequence (the load distribution of the data frames that are odd numbered, or, the load distribution of the data frames that are even numbered), which is carried by the new synchronous control frame, the base station could determine the construction of RLV PDU based on the load distribution of two consecutive data frames.

It should be noted that though the load distribution of the data frames that are odd numbered, the load distribution of two consecutive data frames in synchronous sequence could be realized, then the construction of RLC PDU of two consecutive data frames could be also realized. Similarly, though the load distribution of the data frames that are even numbered, the load distribution of two consecutive data frames in synchronous sequence could be realized, then the construction of RLC PDU of two consecutive data frames could be also realized, which is not described anymore here.

Step 704, the base station obtaining the missing condition of data frame. If the missing condition of data frames reveals two consecutive data frame missing, turn to Step 705, if the missing condition of data frames reveals no data frame is missed or just one data frame is missed, turn to Step 706.

Specifically, when being received new synchronous control frame, the base station could obtain the missing condition according to the new synchronous control frame, it is present obtaining processing and will not go into the details of the invention.

Step 705, the base station determining the packet which is needed to be stopped from sending based on the load distribution of two consecutive missed synchronous frames and the construction of RLC PDU, which has no effect on the normal transmission of other subsequent data frames.

Step 706, the base station ignoring the load distribution in synchronous control frame and the construction of RLC PDU, and proceeding the recover for falling synchronization according to the synchronization portal. The processing in this step is the same with present technology and will not go into the details of the invention.

It should note that if the base station has not been received the synchronous control frame, or, two more continues data frames is missed, then the base station stop sending service data until next synchronization cycle.

Besides, to distinguish itself from present R8 system, the synchronous control frame above can be defined as a new type, for example, defining the synchronous control frame above as TYPE 3 and so on, it is unnecessary to go into details.

Therein, the steps could be adjusted according to practical necessity.

Obviously, through the method provided by the invention, the base station falling synchronization in MBSFN region could regain synchronization while under the condition that missing synchronous data frame continuously; and has no effect on the transmission of the subsequent MBMS service, which promotes the feeling of the user when receiving the MBMS service in the MBSFN region effectively.

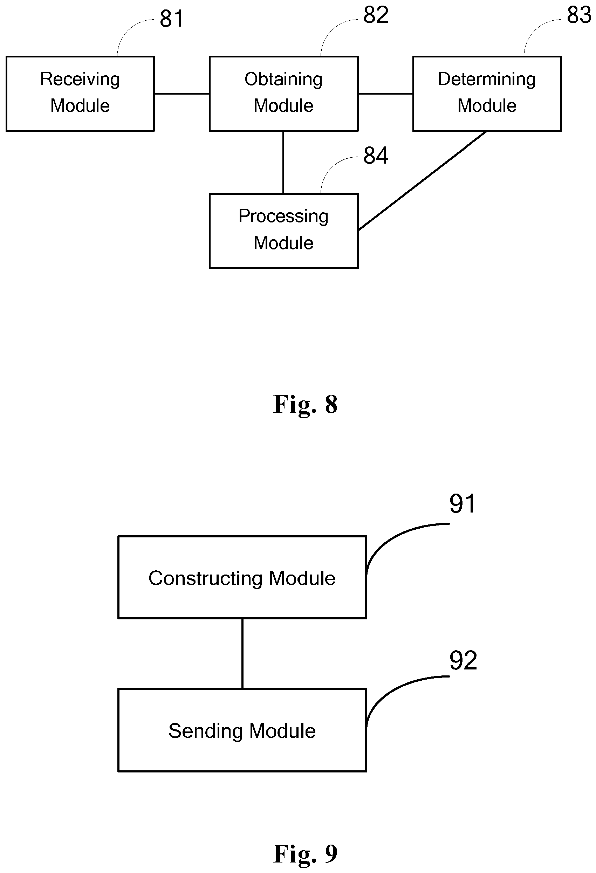

A device on network side, which is provided by another embodiment of the invention, as is shown in FIG.8, comprising:
Receiving Module 81, for receiving the synchronous control frame from BM-SC, the said synchronous control frame carries the load distribution of the data frame that in synchronous sequence; the said load distribution of the data frames that in synchronous sequence, which is carried by the synchronous control frame, comprising: The load distribution of data frames in all synchronous sequence; or, the load distribution of data frames that are even numbered in synchronous sequence; or, the load distribution of data frames that are odd numbered in synchronous sequence.

Obtaining Module 82, for obtaining the constructing information of RLC PDU according to the load distribution of the data frames that in synchronous sequence, which is received by the said receiving module 81.

Determining Module 83, for determining the missing data frames that are needed to be stopped from sending according to the constructing information of the said RLC PDU, which is obtained by the said obtaining module 82.

In the embodiments of the invention, when the said synchronous control frame carries the load distribution of the data frames in all synchronous sequence, the said determining module also for determining the missing data frames that are needed to be stopped from sending according to the constructing information of the said RLC PDU when the missing condition of the data frames is continues data frames missing.

Processing Module 84, for stopping sending data frames until next synchronous cycle when has not been received the said synchronous control frame.

Furthermore, when the said synchronous control frame carries the load distribution of the data frames that are even numbered in synchronous sequence; or, the load distribution of the data frames that are odd numbered in synchronous sequence, the said obtaining also for obtaining the constructing information of RLC PDU according to the load distribution of two consecutive data frames, the load distribution of the data frames that are even numbered in synchronous sequence or the load distribution of the data frames that are odd numbered in synchronous sequence.

The said Determining Module 83 also for determining the missing data frames that are needed to be stopped from sending according to the said constructing information of RLC PDU when under the data frame missing condition that two consecutive data frames are missed.

The said Processing Module 84 also for stopping sending data frame until next synchronous sequence when has not been received the said synchronous control frame, or, under the data frame missing condition that two more consecutive data frames are missing.

Moreover, the said Processing Module 84 also for abandoning the said constructing information of said RLC PDU under the data frame missing condition that no data frame is missed or just one data frame is missed.

Obviously, through the device provided by the invention, the base station falling synchronization in MBSFN region could regain synchronization while under the condition that missing synchronous data frame continuously; and has no effect on the transmission of the subsequent MBMS service, which promotes the feeling of the user when receiving the MBMS service in the MBSFN region effectively.

As is shown in FIG.9, a BM-SC (Broadcast/Multicast Service Center) which is provided by the invention, comprising:
Constructing Module 91, for constructing synchronous control frame, the said synchronous control frame carries the load distribution of the data frame in synchronous sequence; the said load distribution of the data frame that in synchronous sequence, which is carried by the synchronous control frame, comprising: the load distribution of data frames in all synchronous sequence; or, the load distribution of data frames that are even numbered in synchronous sequence; or, the load distribution of data frames that are odd numbered in synchronous sequence.
Sending Module 92, for sending the synchronous control frame that is constructed by the said constructing module 91 to the device on network side, the device on network side determining the constructing information of RLC PDU according to the said load distribution of data frame that in synchronous sequence; and determining the missing data frames that are needed to be stopped from sending according to the constructing information of the said RLC PDU when data frames are missed.

The modules can be varied in one or multiply device of the embodiments. The modules of the embodiments can be combined into a module, and also can be further split into several sub-modules.

Obviously, through the device provided by the invention, the base station falling synchronization in MBSFN region could regain synchronization while under the condition that missing synchronous data frame continuously; and has no effect on the transmission of the subsequent MBMS service, which promotes the feeling of the user when receiving the MBMS service in the MBSFN region effectively.

A system for synchronizing MBMS is also provided by the embodiment of the invention, comprising:
BM-SC, for constructing synchronous control frame, in which carries the load distribution of data frames that in synchronous sequence; and sending the said synchronous control frame to the device on network side; the said load distribution of the data frame that in synchronous sequence, which is carried by the synchronous control frame, comprising: the load distribution of data frames in all synchronous sequence; or, the load distribution of data frames that are even numbered in synchronous sequence; or, the load distribution of data frames that are odd numbered in synchronous sequence.

The device on network side, for receiving the synchronous control frame from BM-SC, determining the constructing information of RLC PDU according to the said load distribution of the data frames that in synchronous sequence; and determining the missing data frames that are needed to be stopped from sending according to the constructing information of the said RLC PDU when data frames are missed.

Specifically, the said device on network side also for determining the constructing information of RLC PDU when the said synchronous control frame carries the load distribution of the data frames that are even numbered in synchronous sequence; or, the said device on network side determining the constructing information of RLC PDU according to the load distribution of two consecutive data frames, the load distribution of the data frames that are even numbered in synchronous sequence or the load distribution of the data frames that are odd numbered in synchronous sequence when the load distribution of the data frame that are odd numbered is in synchronous sequence.

Obviously, through the system provided by the invention, the base station falling synchronization in MBSFN region could regain synchronization while under the condition that missing synchronous data frame continuously; and has no effect on the transmission of the subsequent MBMS service, which promotes the feeling of the user when receiving the MBMS service in the MBSFN region effectively.

Through the description of the embodiments above, the technical personnel in this field can understand clearly that the present invention can be implemented by hardware or software and necessary current hardware platform. Based on this understanding, the technical program of the present invention can be embodied by a form of software products which can be stored in a nonvolatile storage medium (such as CD-ROM, U disk, mobile hard disk, etc.), including a number of instructions for making a computer device (such as personal computers, servers, or network equipments, etc.) implement the methods described in the embodiments of the present invention.

The technical personnel in this field can be understood that the illustration is only schematic drawings of a preferred embodiment, and the module or process is not necessary for the implementation of the present invention.

## Claims

1. A method for synchronizing Multimedia Broadcast Multicast Service, MBMS, comprising:
receiving (S501), by a network device, a synchronous control frame from a Broadcast/Multicast Service Center, BM-SC, wherein the synchronous control frame carries therein load distribution of data frames transmitted within one or more synchronous sequences;
determining (S502), by the network device, constructing information of Radio Link Control Protocol Data Unit, RLC PDU, according to the load distribution of the data frames within the one or more synchronous sequences; and
determining (S503), by the network device, the missed data frames which are needed to be stopped from sending by the BM-SC according to the constructing information of the RLC PDU, when the data frames are missed from receiving by the network device,
wherein the load distribution of the data frames within the one or more synchronous sequences includes:
load distribution of all data frames within all synchronous sequences;
load distribution of even-numbered data frames within the synchronous sequences; or
load distribution of odd-numbered data frames within the synchronous sequences,
the method is **characterized by** further comprising:
stopping, by the network device, from sending data frames until a next synchronous cycle, when the network device fails to receive the synchronous control frame.

2. The method according to claim 1, wherein when the synchronous control frame carries therein the load distribution of the data frames within all synchronous sequences,
the determining, by the network device, the missed data frames which are needed to be stopped from sending by the BM-SC according to the constructing information of RLC PDU comprises:
determining, by the network device, the missed data frames which are needed to be stopped from sending by the BM-SC according to the constructing information of RLC PDU, when the data frames are continuously missed.

3. The method according to claim 1, wherein when the synchronous control frame carries therein the load distribution of even-numbered data frames within the synchronous sequences, the determining, by the network device, constructing information of RLC PDU according to the load distribution of the data frames within the one or more synchronous sequences comprises: determining, by the network device, the constructing information of the RLC PDU according to load distribution of two consecutive data frames and load distribution of the even-numbered data frames within the synchronous sequences; or
when the synchronous control frame carries therein the load distribution of odd-numbered data frames within the synchronous sequences, the determining, by the network device, constructing information of RLC PDU according to the load distribution of the data frames within the one or more synchronous sequences comprises: determining, by the network device, the constructing information of the RLC PDU according to load distribution of two consecutive data frames and load distribution of the odd-numbered data frames within the synchronous sequences.

4. The method according to claim 3, wherein the determining, by the network device, the missed data frames which are needed to be stopped from sending by the BM-SC according to the constructing information of RLC PDU comprises:
determining, by the network device, the missed data frames which are needed to be stopped from sending by the BM-SC, according to the constructing information of the RLC PDU, when there are two consecutive data frames missed.

5. The method according to claim 3, further comprising:
stopping, by the network device, from sending data frames until the next synchronous cycle, when the network device fails to receive the synchronous control frame or when more than two consecutive data frames are missed.

6. The method according to claim 2 or 4, further comprising:
discarding, by the network device, the constructing information of the RLC PDU, when the network device never fails to receive data frames or when only one data frame is missed.

7. A network device, comprising:
a receiving module (81) adapted to receive a synchronous control frame from a Broadcast/Multicast Service Center, BM-SC, wherein the synchronous control frame carries therein load distribution of data frames transmitted within one or more synchronous sequences;
an obtaining module (82) adapted to obtain constructing information of Radio Link Control Protocol Data Unit, RLC PDU, according to the load distribution of the data frames within the one or more synchronous sequences which are received by the receiving module;
a determining module (83) adapted to determine the missed data frames which are needed to be stopped from sending by the BM-SC according to the constructing information of the RLC PDU which is obtained by the obtaining module,
wherein the load distribution of the data frames within the one or more synchronous sequences includes:
load distribution of all data frames within all synchronous sequences;
load distribution of even-numbered data frames within the synchronous sequences; or
load distribution of odd-numbered data frames within the synchronous sequences, the network device is **characterized by** further comprising:
a processing module (84) adapted to stop sending data frames until a next synchronous cycle,
when the network device fails to receive the synchronous control frame.

8. The network device according to claim 7, wherein when the synchronous control frame carries therein the load distribution of the data frames within all synchronous sequences,
the determining module further determines the missed data frames which are needed to be stopped from sending by the BM-SC according to the constructing information of RLC PDU, when the data frames are continuously missed.

9. The network device according to claim 7, wherein when the synchronous control frame carries therein the load distribution of even-numbered data frames or odd-numbered data frames within the synchronous sequences, the obtaining module further obtains the constructing information of the RLC PDU according to load distribution of two consecutive data frames and load distribution of the even-numbered data frames or the odd-numbered data frames within the synchronous sequences.

10. The network device according to claim 9, wherein
the determining module further determines the missed data frames which are needed to be stopped from sending by the BM-SC, according to the constructing information of the RLC PDU, when there are two consecutive data frames missed; and
the processing module further stops from sending data frames until the next synchronous cycle, when the network device fails to receive the synchronous control frame or when more than two consecutive data frames are missed.

11. The network device according to claim 8 or 10, wherein
the processing module further discards the constructing information of the RLC PDU, when the network device never fails to receive data frames or when only one data frame is missed.

## Patentansprüche

1. Verfahren zur Synchronisierung von Multimedia Broadcast Multicast Service, MBMS, umfassend:
Empfangen (S501) eines synchronen Steuerrahmens von einem Broadcast/Multicast Service Center, BM-SC, durch eine Netzwerkvorrichtung, wobei der synchrone Steuerrahmen eine Lastverteilung von Rahmen trägt, die innerhalb einer oder mehrerer synchroner Sequenzen gesendet werden;
Bestimmen (S502), durch die Netzwerkvorrichtung, von Konstruktionsinformationen der Radio Link Control Protocol Data Unit, RLC PDU, gemäß der Lastverteilung der Datenrahmen innerhalb der einen oder mehreren synchronen Sequenzen; und
Bestimmen (S503), durch die Netzwerkvorrichtung, der verpassten Datenrahmen, die benötigt werden, um das Senden durch das BM-SCBM-SC gemäß der Konstruktionsinformation der RLC PDU zu stoppen, wenn das Empfangen der Datenrahmen durch die Netzwerkvorrichtung verpasst wird,
wobei die Lastverteilung der Datenrahmen innerhalb der einen oder mehreren synchronen Sequenzen einschließt:
Lastverteilung aller Datenrahmen innerhalb aller synchronen Sequenzen;
Lastverteilung von geraden Datenrahmen innerhalb der synchronen Sequenzen; oder
Lastverteilung von ungeraden Datenrahmen innerhalb der synchronen Sequenzen,
wobei das Verfahren **dadurch gekennzeichnet ist, dass** es weiter umfasst:
Stoppen des Sendens von Datenrahmen durch die Netzwerkvorrichtung bis zu einem nächsten synchronen Zyklus, wenn das Empfangen des synchronen Steuerrahmens durch die Netzwerkvorrichtung fehlschlägt.

2. Verfahren nach Anspruch 1, wobei der synchrone Steuerrahmen die Lastverteilung der Datenrahmen innerhalb aller synchronen Sequenzen in sich trägt,
das Bestimmen, durch die Netzwerkvorrichtung, der verpassten Datenrahmen, die benötigt werden, um das Senden durch das BM-SC zu stoppen, gemäß der Konstruktionsinformationen der RLC PDU umfasst:
Bestimmen, durch die Netzwerkvorrichtung, der verpassten Datenrahmen, die benötigt werden, um das Senden durch das BM-SC gemäß der Konstruktionsinformation der RLC PDU zu stoppen, wenn die Datenrahmen kontinuierlich verpasst werden.

3. Verfahren nach Anspruch 1, wobei, wenn der synchrone Steuerrahmen die Lastverteilung von geraden Datenrahmen innerhalb der synchronen Sequenzen trägt, das Bestimmen der Konstruktionsinformationen der RLC PDU durch die Netzwerkvorrichtung gemäß der Lastverteilung der Datenrahmen innerhalb der einen oder mehreren synchronen Sequenzen Folgendes umfasst: Bestimmen der Konstruktionsinformationen der RLC PDU durch die Netzwerkvorrichtung gemäß der Lastverteilung von zwei aufeinanderfolgenden Datenrahmen und der Lastverteilung der geraden Datenrahmen innerhalb der synchronen Sequenzen; oder
wenn der synchrone Steuerrahmen die Lastverteilung von ungeraden Datenrahmen innerhalb der synchronen Sequenzen trägt, das Bestimmen, durch die Netzwerkvorrichtung, der Konstruktionsinformationen der RLC PDU gemäß der Lastverteilung der Datenrahmen innerhalb der einen oder mehreren synchronen Sequenzen Folgendes umfasst: Bestimmen, durch die Netzwerkvorrichtung, der Konstruktionsinformationen der RLC PDU gemäß der Lastverteilung von zwei aufeinanderfolgenden Datenrahmen und der Lastverteilung der ungeraden Datenrahmen innerhalb der synchronen Sequenzen.

4. Verfahren nach Anspruch 3, wobei das Bestimmen der verpassten Datenrahmen durch die Netzwerkvorrichtung, die benötigt werden, um das Senden durch das BM-SC gemäß der Konstruktionsinformationen der RLC PDU zu stoppen, Folgendes umfasst:
Bestimmen, durch die Netzwerkvorrichtung, der verpassten Datenrahmen, die benötigt werden, um das Senden durch das BM-SC zu stoppen, gemäß der Konstruktionsinformationen der RLC PDU, wenn zwei aufeinanderfolgende, verpasste Datenrahmen vorliegen.

5. Verfahren nach Anspruch 3, weiter umfassend:
Stoppen des Sendens von Datenrahmen durch die Netzwerkvorrichtung bis zum nächsten synchronen Zyklus, wenn die Netzwerkvorrichtung den synchronen Steuerrahmen nicht empfängt oder wenn mehr als zwei aufeinanderfolgende Datenrahmen verpasst werden.

6. Verfahren nach Anspruch 2 oder 4, weiter umfassend:
Verwerfen der Konstruktionsinformationen der RLC PDU durch die Netzwerkvorrichtung, wenn die Netzwerkvorrichtung niemals keine Datenrahmen empfängt oder wenn nur ein Datenrahmen verpasst wird.

7. Netzwerkvorrichtung, umfassend:
ein Empfangsmodul (81), das dazu angepasst ist, einen synchronen Steuerrahmen von einem Broadcast/Multicast Service Center, BM-SC, zu empfangen, wobei der synchrone Steuerrahmen eine Lastverteilung der gesendeten Datenrahmen innerhalb einer oder mehrerer synchroner Sequenzen in sich trägt,
ein Erhaltungsmodul (82), das dazu angepasst ist, Konstruktionsinformationen der Radio Link Control Protocol Data Unit, RLC PDU, gemäß der Lastverteilung der Datenrahmen innerhalb der einen oder mehreren synchronen Sequenzen zu erhalten, die von dem Empfangsmodul empfangen werden;
ein Bestimmungsmodul (83), das dazu angepasst ist, die verpassten Datenrahmen zu bestimmen, deren Senden durch das BM-SC gemäß der Konstruktionsinformationen der RLC PDU, die durch das Erhaltungsmodul erhalten wird, gestoppt werden muss,
wobei die Lastverteilung der Datenrahmen innerhalb der einen oder mehreren synchronen Sequenzen einschließt:
Lastverteilung aller Datenrahmen innerhalb aller synchronen Sequenzen;
Lastverteilung von geraden Datenrahmen innerhalb der synchronen Sequenzen; oder
Lastverteilung von ungeraden Datenrahmen innerhalb der synchronen Sequenzen, wobei die Netzwerkvorrichtung ist **dadurch gekennzeichnet, dass** sie weiter umfasst:
ein Verarbeitungsmodul (84), das dazu angepasst ist, das Senden von Datenrahmen bis zu einem nächsten synchronen Zyklus zu stoppen, wenn das Empfangen des synchronen Steuerrahmens durch die Netzwerkvorrichtung fehlschlägt.

8. Netzwerkvorrichtung nach Anspruch 7, wobei, wenn der synchrone Steuerrahmen die Lastverteilung der Datenrahmen innerhalb aller synchronen Sequenzen in sich trägt,
das Bestimmungsmodul weiter die verpassten Datenrahmen bestimmt, die benötigt werden, um das Senden durch das BM-SC gemäß der Konstruktionsinformation der RLC PDU zu stoppen, wenn die Datenrahmen kontinuierlich verpasst werden.

9. Netzwerkvorrichtung nach Anspruch 7, wobei, wenn der synchrone Steuerrahmen die Lastverteilung von geraden Datenrahmen oder der ungeraden Datenrahmen innerhalb der synchronen Sequenzen trägt, das Erhaltungsmodul weiter die Konstruktionsinformationen der RLC PDU gemäß der Lastverteilung von zwei aufeinanderfolgenden Datenrahmen und der Lastverteilung der geraden Datenrahmen oder der ungeraden Datenrahmen innerhalb der synchronen Sequenzen erhält.

10. Netzwerkvorrichtung nach Anspruch 9, wobei
das Bestimmungsmodul weiter die verpassten Datenrahmen bestimmt, die benötigt werden, um das Senden durch das BM-SC gemäß der Konstruktionsinformationen der RLC PDU zu stoppen, wenn zwei aufeinanderfolgende, verpasste Datenrahmen vorliegen; und
das Verarbeitungsmodul weiter das Senden von Datenrahmen bis zum nächsten synchronen Zyklus stoppt, wenn das Empfangen des synchronen Steuerrahmens durch die Netzwerkvorrichtung fehlschlägt oder wenn mehr als zwei aufeinanderfolgende Datenrahmen verpasst werden.

11. Netzwerkvorrichtung nach Anspruch 8 oder 10, wobei
das Verarbeitungsmodul weiter die Konstruktionsinformationen der RLC PDU verwirft, wenn das Empfangen der Datenrahmen durch die Netzwerkvorrichtung fehlschlägt oder wenn nur ein Datenrahmen verpasst wird.

## Revendications

1. Procédé de synchronisation d'un service de diffusion/multidiffusion multimédia, MBMS, comprenant :
une réception (S501), par un dispositif de réseau, d'une trame de commande synchrone à partir d'un centre de service de diffusion/multidiffusion, BM-SC, dans lequel la trame de commande synchrone transporte en son sein une répartition de charges de trames de données transmises dans une ou plusieurs séquences synchrones ;
une détermination (S502), par le dispositif de réseau, d'informations de construction d'une unité de données de protocole de commande de liaison radio, RLC PDU, conformément à la répartition de charges des trames de données dans les une ou plusieurs séquences synchrones ; et
une détermination (S503), par le dispositif de réseau, des trames de données manquées dont l'envoi par le BM-SC doit être arrêté conformément aux informations de construction de la RLC PDU, lorsque la réception des trames de données par le dispositif de réseau est manquée,
dans lequel la répartition de charges des trames de données dans les une ou plusieurs séquences synchrones inclut :
une répartition de charges de toutes les trames de données dans toutes les séquences synchrones ;
une répartition de charges de trames de données paires dans les séquences synchrones ; ou
une répartition de charges de trames de données impaires dans les séquences synchrones,
le procédé est **caractérisé en ce qu'**il comprend en outre :
un arrêt, par le dispositif de réseau, de l'envoi de trames de données jusqu'à un cycle synchrone suivant, lorsque le dispositif de réseau échoue à recevoir la trame de commande synchrone.

2. Procédé selon la revendication 1, dans lequel lorsque la trame de commande synchrone transporte en son sein la répartition de charges des trames de données dans toutes les séquences synchrones,
la détermination, par le dispositif de réseau, des trames de données manquées dont l'envoi par le BM-SC doit être arrêté conformément aux informations de construction de la RLC PDU comprend :
une détermination, par le dispositif de réseau, des trames de données manquées dont l'envoi par le BM-SC doit être arrêté conformément aux informations de construction de la RLC PDU, lorsque les trames de données sont continuellement manquées.

3. Procédé selon la revendication 1, dans lequel lorsque la trame de commande synchrone transporte en son sein la répartition de charges de trames de données paires dans les séquences synchrones, la détermination, par le dispositif de réseau, d'informations de construction d'une RLC PDU conformément à la répartition de charges des trames de données dans les une ou plusieurs séquences synchrones comprend : une détermination, par le dispositif de réseau, des informations de construction de la RLC PDU conformément à une répartition de charges de deux trames de données consécutives et une répartition de charges des trames de données paires dans les séquences synchrones ; ou
lorsque la trame de commande synchrone transporte en son sein la répartition de charges de trames de données impaires dans les séquences synchrones, la détermination, par le dispositif de réseau, d'informations de construction d'une RLC PDU conformément à la répartition de charges des trames de données dans les une ou plusieurs séquences synchrones comprend : une détermination, par le dispositif de réseau, des informations de construction de la RLC PDU conformément à une répartition de charges de deux trames de données consécutives et une répartition de charges des trames de données impaires dans les séquences synchrones.

4. Procédé selon la revendication 3, dans lequel la détermination, par le dispositif de réseau, des trames de données manquées dont l'envoi par le BM-SC doit être arrêté conformément aux informations de construction d'une RLC PDU comprend :
une détermination, par le dispositif de réseau, des trames de données manquées dont l'envoi par le BM-SC doit être arrêté, conformément aux informations de construction de la RLC PDU, lorsqu'il y a deux trames de données consécutives manquées.

5. Procédé selon la revendication 3, comprenant en outre :
un arrêt, par le dispositif de réseau, d'un envoi de trames de données jusqu'au cycle synchrone suivant, lorsque le dispositif de réseau échoue à recevoir la trame de commande synchrone ou lorsque plus de deux trames de données consécutives sont manquées.

6. Procédé selon la revendication 2 ou 4, comprenant en outre :
un rejet, par le dispositif de réseau, des informations de construction de la RLC PDU, lorsque le dispositif de réseau n'échoue jamais à recevoir des trames de données ou lorsqu'une seule trame de données est manquée.

7. Dispositif de réseau, comprenant :
un module de réception (81) adapté pour recevoir une trame de commande synchrone à partir d'un centre de service de diffusion/multidiffusion, BM-SC, dans lequel la trame de commande synchrone transporte en son sein une répartition de charges de trames de données transmises dans une ou plusieurs séquences synchrones ;
un module d'obtention (82) adapté pour obtenir des informations de construction d'une unité de données de protocole de commande de liaison radio, RLC PDU, conformément à la répartition de charges des trames de données dans les une ou plusieurs séquences synchrones qui sont reçues par le module de réception ;
un module de détermination (83) adapté pour déterminer les trames de données manquées dont l'envoi par le BM-SC doit être arrêté conformément aux informations de construction de la RLC PDU qui sont obtenues par le module d'obtention,
dans lequel la répartition de charges des trames de données dans les une ou plusieurs séquences synchrones inclut :
une répartition de charges de toutes les trames de données dans toutes les séquences synchrones ;
une répartition de charges de trames de données paires dans les séquences synchrones ; ou
une répartition de charges de trames de données impaires dans les séquences synchrones, le dispositif de réseau est **caractérisé en ce qu'**il comprend en outre :
un module de traitement (84) adapté pour arrêter l'envoi de trames de données jusqu'à un cycle synchrone suivant, lorsque le dispositif de réseau échoue à recevoir la trame de commande synchrone.

8. Dispositif de réseau selon la revendication 7, dans lequel lorsque la trame de commande synchrone transporte en son sein la répartition de charges des trames de données dans toutes les séquences synchrones,
le module de détermination détermine en outre les trames de données manquées dont l'envoi par le BM-SC doit être arrêté conformément aux informations de construction d'une RLC PDU, lorsque les trames de données sont continuellement manquées.

9. Dispositif de réseau selon la revendication 7, dans lequel lorsque la trame de commande synchrone transporte en son sein la répartition de charges de trames de données paires ou de trames de données impaires dans les séquences synchrones, le module d'obtention obtient en outre les informations de construction de la RLC PDU conformément à une répartition de charges de deux trames de données consécutives et une répartition de charges des trames de données paires ou des trames de données impaires dans les séquences synchrones.

10. Dispositif de réseau selon la revendication 9, dans lequel
le module de détermination détermine en outre les trames de données manquées dont l'envoi par le BM-SC doit être arrêté, conformément aux informations de construction de la RLC PDU, lorsqu'il y a deux trames de données consécutives manquées ; et
le module de traitement arrête en outre l'envoi de trames de données jusqu'au cycle synchrone suivant, lorsque le dispositif de réseau échoue à recevoir la trame de commande synchrone ou lorsque plus de deux trames de données consécutives sont manquées.

11. Dispositif de réseau selon la revendication 8 ou 10, dans lequel
le module de traitement rejette en outre les informations de construction de la RLC PDU, lorsque le dispositif de réseau n'échoue jamais à recevoir des trames de données ou lorsqu'une seule trame de données est manquée.
